# EUROPEAN PATENT APPLICATION

(11) **EP 2 363 193 A2**
(43) Date of publication of application: **07.09.2011**
(21) Application number: 10170751.1
(22) Date of filing: 26.07.2010
(51) Int. Cl.: B01D 53/32, B01D 53/56, B01D 53/86, H01M 8/06

(54) **Electrochemical-catalytic converter for exhaust emission control with power generation**

(30) Priority: 04.03.2010 TW 099106250
(71) Applicant: National Tsing Hua University, Hsinchu 300 (TW)
(72) Inventor: Huang, Ta-Jen, Hsinchu City (TW)
(74) Representative: 2K Patentanwälte Blasberg Kewitz & Reichel

(57) **Abstract**

An electrochemical-catalytic converter, which can remove nitrogen oxides (NOₓ), carbon monoxide (CO), hydrocarbons (HCs) and particulate matter (PM) in exhaust gas and generate electric power simultaneously is described. The electrochemical-catalytic converter comprises a cell module (10), wherein nitrogen oxides are reacted electrochemically to form nitrogen, and wherein carbon monoxide, hydrocarbons and particulate matter are catalyzed to form carbon dioxide and water by an oxidation catalyst.

## Description

### FIELD OF THE INVENTION

The present invention relates to an electrochemical-catalytic converter, particularly to an electrochemical-catalytic converter for exhaust emission control with power generation to effectively reduce nitrogen oxides (NOₓ), carbon monoxide (CO), hydrocarbons (HCs) and particulate matter (PM) in exhaust gas.

### BACKGROUND OF THE INVENTION

Air is indispensable for the living of human beings. Fresh and clean air is essential for the health of people. The remarkable advance of science and technology has brought the prosperous development of economics. However, the exhaust emission of automobiles and factories has become the main source of air pollution and greatly degraded the quality of air.

Take automobiles for an example. The vehicle exhaust emission standard is growing more and more stringent. However, the air pollution caused by vehicles is still getting more and more serious because the number of vehicles increases day by day. Generally, different types of fuels are burned in a cylinder to release thermal energy and generate dynamic power for engine operation of an automobile. However, the combustion of fuel also generates exhaust gases including harmful pollutants, such as nitrogen oxides (NOₓ), carbon monoxide (CO), hydrocarbons (HCs), particulate matter (PM) and the like. These pollutants not only form photochemical smog, but also destroy the ozone layer, aggravate the greenhouse effect, cause acid rain, damage ecological environment, and harm health of human beings.

Incomplete combustion generates carbon monoxide, which combines with hemoglobin to form carboxyhemoglobin (COHb). The hemoglobin's combination affinity for carbon monoxide is 300 times greater than that for oxygen. Thus, too high a concentration of carbon monoxide in air will affect the oxygen delivery ability of hemoglobin. A nitrogen oxide comes from the chemical combination of nitrogen and oxygen and is usually exhausted in form of nitric oxide (NO) or nitrogen dioxide (NO₂). After illuminated by ultraviolet (UV), nitrogen oxides react with hydrocarbons to form toxic photochemical smog which has special smell, irritates people's eyes, injures plants, and reduces visibility in atmosphere. Also nitrogen oxides react with moisture in the air to form nitric acid and nitrous acid which are elements of acid rain. A low concentration of hydrocarbon will irritate the respiratory system. A higher concentration of hydrocarbon will affect the function of the central nervous system.

Therefore, many regions, including European Union, USA, Japan and the Republic of China, have established stringent exhaust emission standards, such as US Bin5 and Euro6, which regulate the exhaust emission standards of nitrogen oxides (NOₓ), carbon monoxide (CO), hydrocarbons (HCs) and particulate matter (PM) to control and decrease the emission of polluting gases and encourage the manufacturers to produce, develop or introduce the latest products adopting pollution prevention technologies.

In the conventional emission control technology for lean burn exhaust, no single device or converter can simultaneously undertake the conversion of nitrogen oxides (NOₓ), carbon monoxide (CO), hydrocarbons (HCs) and particulate matter (PM). Catalytic converters of automobile emission systems for the lean burn exhaust can catalyze the oxidation of carbon monoxide and hydrocarbons. Catalytic particulate filters can trap and oxidize the particulate matter. Another auxiliary device or system is needed to convert nitrogen oxides. For example, in addition to an oxidizing catalytic converter for oxidation of carbon monoxide and hydrocarbons, most of the tailpipes of current diesel vehicles are equipped with an EGR (Exhaust Gas Recirculation) system to control emission of nitrogen oxides. The latest diesel vehicles may be equipped with an SCR (Selective Catalytic Reduction) system to reduce nitrogen oxides.

The SCR system adopts ammonia (NH₃) or aqueous solution of urea (CO(NH₂)₂) as the reactant. The aqueous solution of urea is injected into the tailpipe via a nozzle and reacted with water to form ammonia. The ammonia reacts with nitrogen oxides to generate nitrogen (N₂) and water (H₂O). However, ammonia is toxic and hard to store and may leak. The incomplete reaction of ammonia causes secondary pollution. Further, the SCR system is bulky and needs to be equipped with precision sensors to provide auxiliary control.

An US patent No.5,401,372 discloses an "Electrochemical Catalytic Reduction Cell for the Reduction of NOₓ in an O₂-Containing Exhaust Emission", which is a device dedicated to remove nitrogen oxides, and which utilizes electrochemical catalytic reduction reaction and adopts vanadium pentaoxide (V₂O₅) as the catalyst to convert nitrogen oxides into nitrogen. The device has to add a power supply to operate the electrochemical cell thereof. Thus the device of this prior art not only consumes energy resources, also cannot remove harmful exhaust gases simultaneously.

### SUMMARY OF THE INVENTION

The objective of the present invention is to provide an electrochemical-catalytic converter for exhaust emission control with power generation, which can remove the nitrogen oxides, carbon monoxide, hydrocarbons and particulate matter in the exhaust gas without consuming power.

To achieve the abovementioned objective, the present invention proposes an electrochemical-catalytic converter, which comprises at least one cell module, a heating unit, a fuel input unit, a fuel output unit, an exhaust gas input unit, and an exhaust gas output unit. The cell module includes a cathode compartment, an anode compartment and a membrane-electrode assembly. The membrane-electrode assembly is interposed between the cathode compartment and the anode compartment. The cathode compartment includes an oxidation catalyst. The fuel input unit and the fuel output unit are respectively coupled to two sides of the anode compartment to function as the fuel input terminal and the fuel output terminal of the cell module while operating. The exhaust gas input unit and the exhaust gas output unit are respectively coupled to two sides of the cathode compartment to function as the exhaust gas input terminal and the exhaust gas output terminal of the cell module to be treated as desired.

The heating unit heats the membrane-electrode assembly to a working temperature to make the fuel to perform an electrochemical reaction in the membrane-electrode assembly to generate power. The nitrogen oxides in the exhaust gas react electrochemically in the membrane-electrode assembly to form nitrogen. The carbon monoxide, hydrocarbons and particulate matter in the exhaust gas are catalyzed to form carbon dioxide and water by the oxidation catalyst. Thereby, the exhaust gas is decontaminated.

Below, the technical contents of the present invention are described in detail with the embodiments in cooperation with the drawings.

### BRIEF DESCRIPTION OF THE DRAWINGS

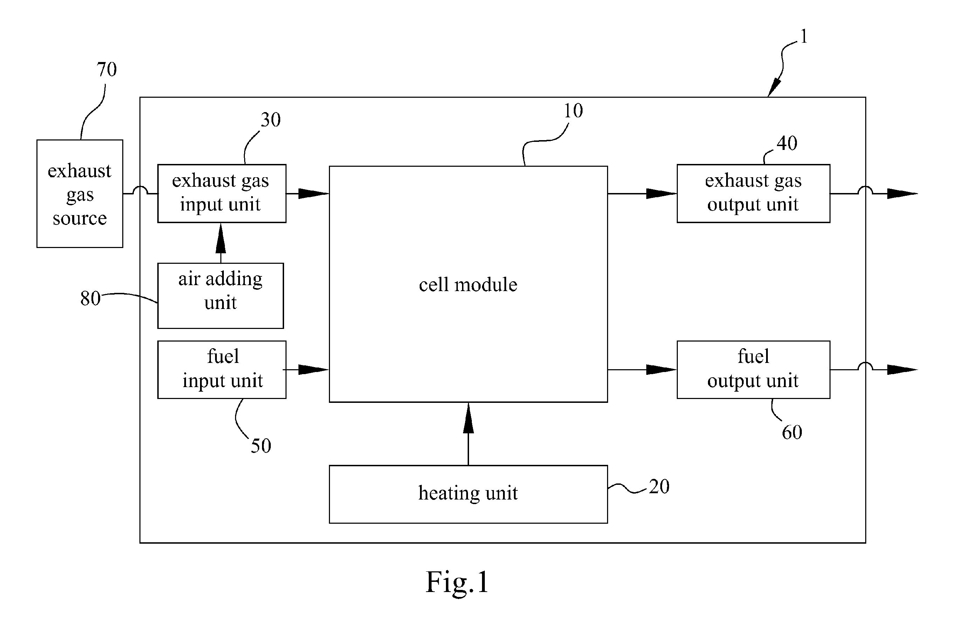

The embodiments of the present invention are described in accompany with the following drawings. Fig.1 is assigned to be the representative drawing of the invention.
Fig.1 is a diagram schematically showing the system of an electrochemical-catalytic converter according to one embodiment of the present invention;
Fig.2 is a diagram schematically showing the architecture of a cell module of an electrochemical-catalytic converter according to one embodiment of the present invention;
Fig.3 is a diagram schematically showing the system of an electrochemical-catalytic converter according to another embodiment of the present invention; and
Fig.4 is a diagram schematically showing the architecture of a cell module of an electrochemical-catalytic converter according to another embodiment of the present invention.

### DETAILED DESCRIPTION OF THE PREFERRED

### EMBODIMENTS

The present invention proposes an electrochemical-catalytic converter for reducing nitrogen oxides (NOₓ), carbon monoxide (CO), hydrocarbons (HCs) and particulate matter (PM) in an exhaust gas with power generated simultaneously. The electrochemical-catalytic converter of the present invention can be applied to various exhaust emission devices, such as the chimneys of factories and the exhaust emission devices of generators, automobiles and boats. There is no limitation to the exhaust emission device in the present invention. In the present invention, the "exhaust gas" is referred to the gas to be decontaminated and includes at least one of the harmful components mentioned above. Therefore, the exhaust gas does not necessarily include all of the four abovementioned harmful components. The technical contents of the present invention are described in detail in cooperation with the drawings below.

Refer to Figs. 1-2 respectively showing the converter system and the cell module architecture according to the present invention. The electrochemical-catalytic converter 1 of the present invention comprises a cell module 10, a heating unit 20, an exhaust gas input unit 30, an exhaust gas output unit 40, a fuel input unit 50, and a fuel output unit 60. The heating unit 20 is used to heat the cell module 10 to a working temperature. The exhaust gas input unit 30 and the exhaust gas output unit 40 are coupled to the cell module 10 and respectively function as the input terminal and the output terminal of the cell module 10 for decontaminating the exhaust gas. The exhaust gas input unit 30 may receive exhaust gas from an exhaust gas source 70, such as a boiler, a generator, a chimney, or a vehicle engine. The exhaust gas input unit 30 may include an air adding unit 80 for adding air into the exhaust gas; the air adding unit 80 may be an air pump. The fuel input unit 50 and the fuel output unit 60 are coupled to the cell module 10 and respectively function as the fuel input terminal and the fuel output terminal of the cell module 10 for operating. The fuel input unit 50 may include a fuel tank for storing fuel and delivering the fuel to the fuel input terminal.

The cell module 10 may be an SOFC (Solid Oxide Fuel Cell) stacking structure, such as a tubular or planar SOFC stacking structure. However, the present invention does not limit the cell module 10 to be an SOFC stacking structure. The cell module 10 further comprises a cathode compartment 11, an anode compartment 12 and a membrane-electrode assembly (MEA) 13, which are stacked one by one with the membrane-electrode assembly 13 interposed between the cathode compartment 11 and the anode compartment 12.

The membrane-electrode assembly 13 further comprises a cathode layer 131, an anode layer 132 and an electrolyte layer 133, and the electrolyte layer 133 is interposed between the cathode layer 131 and the anode layer 132. The electrochemical reaction of the present invention takes place in the membrane-electrode assembly 13. The electrolyte layer 133 conducts ions and separates the reactant gases respectively existing in the cathode layer 131 and the anode layer 132.

In one embodiment, the electrolyte layer 133 is a solid electrolyte which is a non-porous membrane structure able to separate the gases at two sides and conduct ions. The electrolyte layer 133 is made of a material selected from a group consisting of fluorite oxides, perovskite oxides, and the combinations thereof, such as fluorite YSZ (yttria-stabilized zirconia), stabilized zirconia, fluorite GDC (gadolinia-doped ceria), doped ceria, perovskite LSGM (strontium/magnesium-doped lanthanum gallate), and doped lanthanum gallate.

The cathode layer 131 and the anode layer 132 are respectively made of porous materials. In one embodiment, the anode layer 132 is made of a material selected from a group consisting of cermet of nickel and fluorite oxides, perovskite oxides, fluorite oxides, metal-added perovskite oxides, metal-added fluorite oxides, and the combinations thereof, such as Ni-YSZ (nickel-yttria-stabilized zirconia) cermet and Ni-GDC (nickel-gadolinia-doped ceria) cermet. The cathode layer 131 is made of a material selected from a group consisting of perovskite oxides, fluorite oxides, metal-added perovskite oxides, metal-added fluorite oxides, and the combinations thereof, such as perovskite lanthanum strontium cobalt iron oxides, lanthanum strontium manganese oxides, the combination of lanthanum strontium cobalt iron oxides and gadolinia-doped ceria, the combination of lanthanum strontium manganese oxides and gadolinia-doped ceria, vanadium-added lanthanum strontium cobalt iron oxides, vanadium-added lanthanum strontium manganese oxides, the combination of vanadium-added lanthanum strontium cobalt iron oxides and gadolinia-doped ceria, and the combination of vanadium-added lanthanum strontium manganese oxides and gadolinia-doped ceria.

Two ends of the cathode compartment 11 are respectively coupled to the exhaust gas input unit 30 and the exhaust gas output unit 40. The cathode compartment 11 has a cathode channel 111 and a cathode current collecting layer 112. The cathode channel 111 or the cathode current collecting layer 112 has oxidation catalyst (not shown in the drawings). The oxidation catalyst may cover the surface of the cathode channel 111 or the cathode current collecting layer 112 in form of microparticles, or be a porous layer (not shown in the drawings) interposed between the cathode current collecting layer 112 and the cathode channel 111, to catalyze the oxidation reaction of the gas. Two sides of the cathode channel 111 are respectively coupled to the exhaust gas input unit 30 and the exhaust gas output unit 40.

Two ends of the anode compartment 12 are respectively coupled to the fuel input unit 50 and the fuel output unit 60. The anode compartment 12 has an anode channel 121 and an anode current collecting layer 122. Two sides of the anode channel layer 121 are respectively coupled to the fuel input unit 50 and the fuel output unit 60. The cathode current collecting layer 112 and the anode current collecting layer 122 can collect current generated by the membrane-electrode assembly 13 simultaneously.

The exhaust gas input unit 30 inputs the exhaust gas that is to be decontaminated to the cathode channel 111 of the cathode compartment 11. The nitrogen oxides in the exhaust gas are delivered to the cathode layer 131 and electrochemically reacted to form nitrogen. The carbon monoxide, hydrocarbons and particulate matter in the exhaust gas are oxidized to form carbon dioxide and water via the oxidation catalyst in the cathode compartment 11. Then, the unreacted exhaust gas and the reacted gas are transferred from the cathode channel 111 to the exhaust gas output unit 40 to be exhausted. Similarly, the fuel input unit 50 inputs the fuel that is to be transferred to the anode channel 121 of the anode compartment 12. The fuel in the anode channel 121 is delivered to the anode layer 132 and electrochemically reacted to generate power. Then, the unreacted fuel and the reacted products are transferred from the anode channel 121 to the fuel output unit 60 to be exhausted.

In the cell module 10 of the present invention, the harmful components in the exhaust gases are removed via the electrochemical reaction in the membrane-electrode assembly 13 and the catalyzed reaction in the cathode compartment 11 with electric power generated simultaneously. The electrochemical reactions in the cathode layer 131 and the anode layer 132 and the reaction of the abovementioned harmful gases will be described in detail below.

In the present invention, the fuel may be hydrogen (H₂), methanol, ethanol, gasoline, diesel, natural gas, liquefied petroleum gas, etc. The fuel is input to the anode compartment 12 by the fuel input unit 50 and gasified in the anode compartment 12. The gasified fuel is reformed into a fuel consisting of hydrogen (H₂) and carbon monoxide (CO). The fuel including hydrogen (H₂) and carbon monoxide (CO) can react with oxygen ions (O²⁻) in the anode layer 132 and generate electrons as electric power. The chemical reactions of hydrogen and carbon monoxide can be expressed by Formulae (1) and (2):

H₂+O²⁻ → H₂O+2e⁻ (1)

CO+ O²⁻ →CO₂+2e⁻ (2)

The reactant oxygen ions are generated in the cathode layer 131 1 and transported to the anode layer 132 through the electrolyte layer 133. The oxygen ions may be originated from the oxygen in the exhaust gas and generated in the cathode layer 131 according to Formula (3):

O₂+4e⁻ →2O²⁻ (3)

Alternatively, the oxygen ions are the reactant generated by performing DeNOₓ (nitrogen oxide abatement) in the cathode layer 131, which will be described in detail below.

The unreacted fuel and the reacted products are transferred to the fuel output unit 60 and exhausted there. In practice, the reactant output by the fuel output unit 60 can be recycled to the furnace or engine generating the exhaust gas as the fuel thereof. If the electrochemical-catalytic converter 1 of the present invention is applied to a vehicle exhaust treating system, the gas output by the fuel output unit 60 can be guided into the carburetor of the vehicle engine and re-used.

The harmful components of the exhaust gases are converted into harmless gases in the cathode compartment 11 and the cathode layer 131. The harmful nitrogen oxides are mainly nitric oxide (NO) and nitrogen dioxide (NO₂). Nitric oxide (NO) and nitrogen dioxide (NO₂) can electrochemically react to form nitrogen in the cathode layer 131 according to Formulae (4) and (5):

2NO→ N₂+2O (4)

2NO₂ → N₂+4O (5)

Among the reaction products, oxygen atom therein can be transformed to an oxygen ion according to Formula (6):

O+2ₑ⁻ → O²⁻ (6)

The oxygen ions can pass through the electrolyte layer 133 to take part in the reaction in the anode layer 132.

At the beginning of the electrochemical reaction, the heating unit 20 provides heat to drive the oxygen ions in the cathode layer 131 to pass through the electrolyte layer 133 and take part in the reaction in the anode layer 132. Considering the system structure of the present invention and that the anode layer 132 can generate electric power and that precise temperature control is required for the heating unit 20, the heating unit 20 of the present invention can be realized with an electrical heating element.

In one embodiment, the heating unit 20 can be embedded in the anode compartment 12 of the cell module 10 by a sheathed electrical heating coil manner to heat the membrane-electrode assembly 13, such as embedded in the anode channel 121 or the anode current collecting layer 122 of the anode compartment 12. However, the present invention is not limited by this embodiment. In one embodiment, the heating unit 20 can heat the membrane-electrode assembly 13 to a working temperature of 450-900°C to increase the efficiency of oxygen ion transport in the electrolyte layer 133. The working temperature can be appropriately decreased if the material of the electrolyte layer 133 has improved quality or the requirement of converting nitrogen oxides is lowered.

The oxidation catalyst of the cathode compartment 11 can catalyze a reaction to convert carbon monoxide (CO), hydrocarbons (HCs) and particulate matter (PM) into harmless gases, wherein carbon monoxide in the exhaust gas is oxidized into carbon dioxide and hydrocarbons and particulate matter (C-containing matter) are oxidized into carbon dioxide and water respectively according to Formulae (7), (8) and (9):

2CO+ O₂→ 2CO₂ (7)

HCs+ O₂ → H₂O+CO₂ (8)

C+ O₂ → CO₂ (9)

In one embodiment, the elements of the oxidation catalyst are made of a material selected from a group consisting of metal, alloy, fluorite oxides, perovskite oxides, and the combinations thereof.

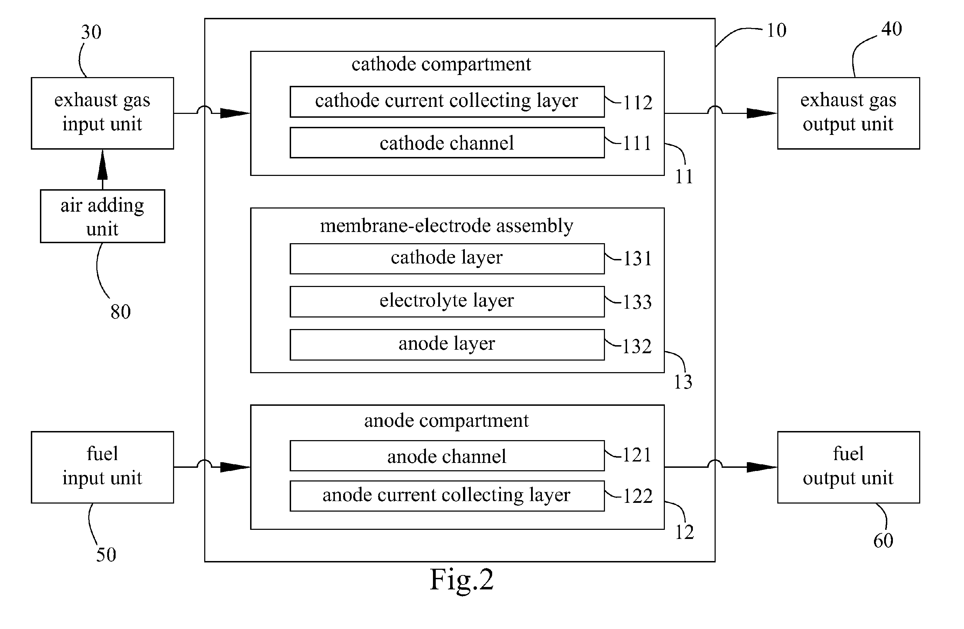

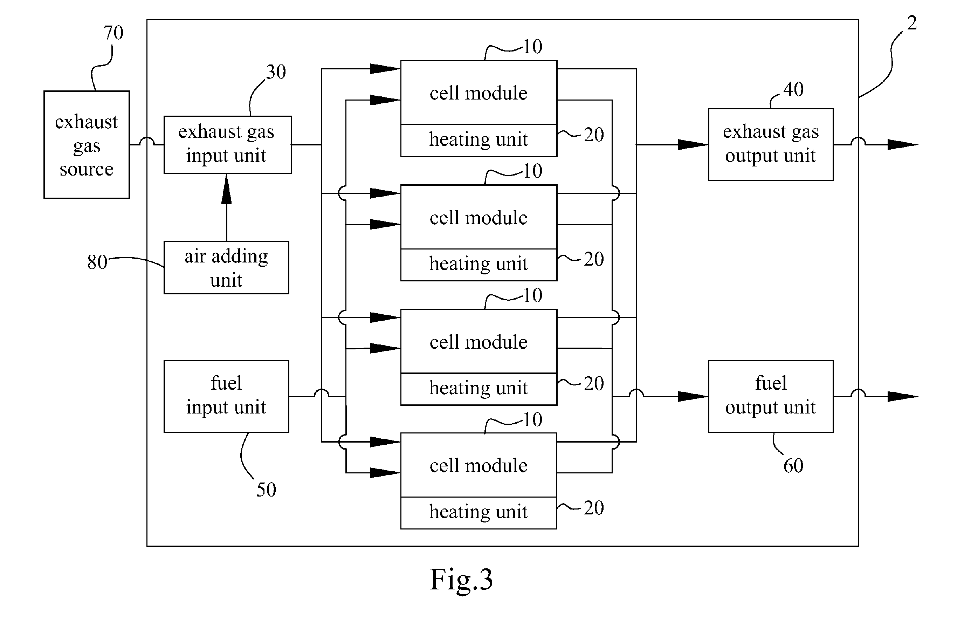

Refer to Fig.3 for the system of an electrochemical-catalytic converter according to another embodiment of the present invention. This embodiment is different from the preceding embodiment in that the electrochemical-catalytic converter 2 of this embodiment comprises a plurality of cell modules 10 and a plurality of heating units 20. The cell modules 10 are stacked one above one. The number of the heating units 20 is equal to or unequal to the number of the cell modules 10. No matter the number of the heating units 20 is equal to or unequal to that of the cell modules 10, the heating units 20 can heat the cell modules 10 to operate. The exhaust gas input unit 30 inputs exhaust gas to the cell modules 10 via different channels or pipes. The fuel input unit 50 also inputs fuel to the cell modules 10 via different channels or pipes. The cell modules 10 exhaust gas via different channels or pipes to the exhaust gas output unit 40 where the exhaust gas is gathered to be exhausted. The cell modules 10 also exhaust spent fuel via different channels or pipes to the fuel output unit 60 where the spent fuel is gathered to be exhausted. Thereby, the exhaust gas entering the electrochemical-catalytic converter 2 can be converted into unpolluted gas by more cell modules 10 to achieve higher exhaust gas treating efficiency. In the present invention, the electrochemical-catalytic converters 1 and 2 can be connected in series or reversely connected in parallel to increase the efficiency of treating the exhaust gas or utilizing the heat. "Reversely connected in parallel" means that the stacking structure of the cell modules 10 is a planer SOFC (Solid Oxide Fuel Cell) stacking structure. Take a stacking structure of two cell modules 10 for an example, the layers in the cell module 10 shown in Fig.2 are reversely arranged, such that one anode current collecting layer 122 in one cell module 10 and another anode current collecting layer 122 in another cell module 10 are coupled to an identical heating unit 20 in parallel. Thereby, the heating unit 20 can simultaneously heat the two cell modules 10; thus, the number of the heating units 20 can be decreased, and the efficiency of heat utilization can be increased.

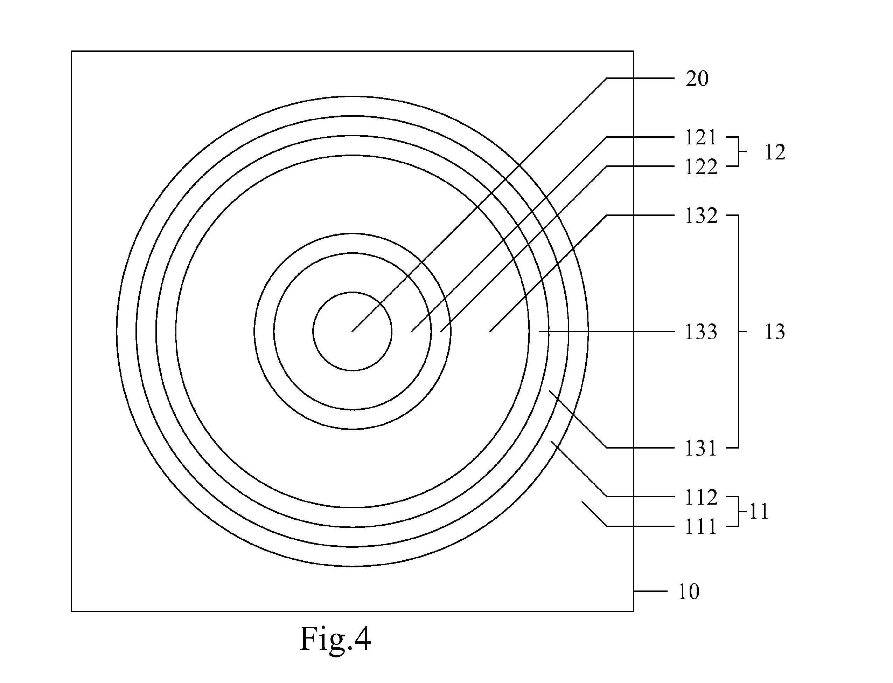

Refer to Fig.4 for the architecture of a cell module 10 of an electrochemical-catalytic converter according to another embodiment of the present invention. As the operation principle is the same as the previous embodiments, only the structure differences are illustrated thereinafter. Comparing with the above mentioned embodiments, the cell module 10 in this embodiment is a tubular SOFC (Solid Oxide Fuel Cell) stacking structure. As shown in Fig.4, the cell module 10 comprises a heating unit 20, an anode compartment 12, a membrane-electrode assembly 13, and a cathode compartment 11 from the center to the outmost layer of the tubular structure in sequence. The anode compartment 12 further includes an anode channel 121 and an anode current collecting layer 122 from the inner side to the outer side. The membrane-electrode assembly 13 further includes an anode layer 132, an electrolyte layer 133, and a cathode layer 131 from the inner side to the outer side. The cathode compartment 11 further includes a cathode current collecting layer 112 and a cathode channel 111 from the inner side to the outer side. The heating unit 20 is embedded in the anode channel 121 for heating the cell module 10 to reach a working temperature. The cathode current collecting layer 112 includes an oxidation catalyst (not shown in the drawings) which can cover the surface of the cathode current collecting layer 112 in form of microparticles to catalyze the oxidation reaction of the gas. In one embodiment, the anode current collecting layer 122 is made of metal or alloy, such as silver, nickel and iron nickel alloys; the cathode current collecting layer 112 is made of a material selected from a group consisting of metal, alloy, perovskite metal oxides, and the combinations thereof, such as silver, gold, platinum, lanthanum strontium cobalt iron oxides, and lanthanum strontium manganese oxides. In the present invention, with the electrochemical-catalytic converter 2 comprising a plurality of cell modules 10 with the tubular structure shown in Fig.4, the cathode channels 111 of all cell modules 10 are interconnected; thus, there is no need to use different channels or pipes to input the exhaust gases from the exhaust gas input unit 30 to the cell modules 10 or to exhaust the gases from the cell modules 10 to the exhaust gas output unit 40.

Via the electrochemical reaction and catalytic reaction, the present invention can remove harmful components in the exhaust gas and generate electric power at the same time. In practice, the voltage of the generated electric power is able to achieve a level of 0.6 volt and less likely to vary with electrochemical reaction of nitrogen oxides in the cathode layer 131 so that the generated electric power can be a relatively stable power supply. After the heating unit 20 heats the membrane-electrode assembly 13 to achieve a working temperature, the exothermic electrochemical oxidation reaction of the anode layer 132 and the exothermic catalytic oxidation reaction of the cathode compartment 11 can persistently supply heat. Thereby, the power consumption of the operation of the cell module 10 can be reduced. The reactions may even generate heat more than that required to sustain the working temperature. In such a case, the surplus heat may be used otherwise. On the other hand, the higher the oxygen concentration in the exhaust gas is, the higher the operation efficiency of the electrochemical-catalytic converters 1 and 2 can be. Therefore, the present invention is particularly suitable to apply to the exhaust gas treatment of lean burn engines, such as the exhaust emission systems of diesel vehicles. In addition, the present invention can treat NOₓ no matter how high the concentration of NOₓ is, this allows one to take advantage of reducing the concentration of particulate matter by an NOₓ-particulate matter trade-off mechanism to a low level to eliminate the need for a particulate filter; the remaining particulate matter can be treated by the oxidation catalyst. In comparison with the conventional technology, the present invention integrates an NOₓ reduction system and an oxidizing catalytic converter to achieve a better exhaust gas treating mechanism and higher exhaust gas treating efficiency. Further, the present invention can function as an auxiliary power unit (APU), which can generate electric power whether to treat the exhaust gas or not.

The embodiments described above are only to exemplify the present invention but not to limit the scope of the present invention. Any equivalent modification or variation according to the technical contents and drawings disclosed in the specification is to be also included within the scope of the present invention.

## Claims

1. An electrochemical-catalytic converter, which is used to control exhaust emission and generate electric power, **characterized by**:
at least one cell module (10) further comprising a cathode compartment (11), an anode compartment (12) and a membrane-electrode assembly (13), the membrane-electrode assembly (13) being interposed between the cathode compartment (11) and the anode compartment (12), the cathode compartment (11) includes an oxidation catalyst;
a heating unit (20) embedded in the cell module (10);
a fuel input unit (50) and a fuel output unit (60) respectively coupled to two sides of the anode compartment (12) to function as a fuel input terminal and a fuel output terminal of the cell module (10) for operating; and
an exhaust gas input unit (30) and an exhaust gas output unit (40) respectively coupled to two sides of the cathode compartment (11) to function as an exhaust gas input terminal and an exhaust gas output terminal of the cell module (10) for treating exhaust gas;
wherein the heating unit (20) heats the membrane-electrode assembly (13) to a working temperature to perform an electrochemical reaction of fuel in the membrane-electrode assembly (13) and generate electric power, and
wherein nitrogen oxides in the exhaust gas electrochemically react to form nitrogen in the membrane-electrode assembly (13),
and
wherein carbon monoxide, hydrocarbons and particulate matter in the exhaust gas are catalyzed to form carbon dioxide and water by the oxidation catalyst,
whereby the exhaust gas is decontaminated.

2. The electrochemical-catalytic converter according to claim 1, wherein the membrane-electrode assembly (13) further comprises a cathode layer (131), an anode layer (132) and an electrolyte layer (133); the electrolyte layer (133) is interposed between the cathode layer (131) and the anode layer (132), and the cathode layer (131) and the anode layer (132) are respectively coupled to the cathode compartment (11) and the anode compartment (12); the cathode compartment (11) further comprises a cathode channel (111) and a cathode current collecting layer (112); the anode compartment (12) further comprises an anode channel (121) and an anode current collecting layer (122); wherein the exhaust gas input unit (30) is coupled to the cathode channel (111), and an oxidation reaction of the exhaust gas takes place in the cathode compartment (11), and the exhaust gas reaches the cathode layer (131) and reacts electrochemically therein; the fuel input unit (50) is coupled to the anode channel (121), and the fuel reaches the anode layer (132) and reacts electrochemically therein.

3. The electrochemical-catalytic converter according to claim 1, wherein the exhaust gas input unit (30) includes an air adding unit (80) for adding air into the exhaust gas.

4. The electrochemical-catalytic converter according to claim 2, wherein the cathode compartment (11), the membrane-electrode assembly (13) and the anode compartment (12) are stacked one by one, and the cathode current collecting layer (112), the cathode channel (111), the cathode layer (131), the electrolyte layer (133), the anode layer (132), the anode channel (121), and the anode current collecting layer (122) are stacked in sequence.

5. The electrochemical-catalytic converter according to claim 2, wherein the cathode compartment (11), the membrane-electrode assembly (13) and the anode compartment (12) are stacked one by one, and the cathode channel (111), the cathode current collecting layer (112), the cathode layer (131), the electrolyte layer (133), the anode layer (132), the anode channel (121), and the anode current collecting layer (122) are stacked in sequence.

6. The electrochemical-catalytic converter according to claim 2, wherein the cathode compartment (11), the membrane-electrode assembly (13) and the anode compartment (12) are stacked one by one, and the cathode channel (111), the cathode current collecting layer (112), the cathode layer (131), the electrolyte layer (133), the anode layer (132), the anode current collecting layer (122), and the anode channel (121) are stacked in sequence.

7. The electrochemical-catalytic converter according to claim 2, wherein the heating unit (20), the anode compartment (12), the membrane-electrode assembly (13), and the cathode compartment (11) are stacked in a tubular structure; the heating unit (20) is located in the center of the tubular structure, and the anode channel (121), the anode current collecting layer (122), the anode layer (132), the electrolyte layer (133), the cathode layer (131), the cathode current collecting layer (112) and the cathode channel (111) are stacked and surround the heating unit (20) in sequence.

8. The electrochemical-catalytic converter according to claim 2, wherein the working temperature is between 450 and 900°C.

9. The electrochemical-catalytic converter according to claim 2, wherein the heating unit (20) is an electrical heating element and/or wherein the heating unit (20) is embedded in the anode compartment (12).

10. The electrochemical-catalytic converter according to claim 2, wherein the oxidation catalyst is made of a material selected from a group consisting of metal, alloy, fluorite oxides, perovskite oxides, and the combinations thereof.

11. The electrochemical-catalytic converter according to claim 2, wherein the oxidation catalyst covers the cathode current collecting layer (112) in form of microparticles.

12. The electrochemical-catalytic converter according to claim 2, wherein the cathode current collecting layer (112) is made of a material selected from a group consisting of metal, alloy, perovskite oxides, and the combinations thereof.

13. The electrochemical-catalytic converter according to claim 2, wherein the oxidation catalyst forms a porous layer interposed between the cathode current collecting layer (112) and the cathode channel (111).

14. The electrochemical-catalytic converter according to claim 2, wherein the oxidation catalyst covers the cathode channel (111) in form of microparticles.

15. The electrochemical-catalytic converter according to claim 2, wherein the electrolyte layer (133) is made of a material selected from a group consisting of fluorite oxides, perovskite oxides, and the combinations thereof.

16. The electrochemical-catalytic converter according to claim 2, wherein the anode layer (132) is made of a material selected from a group consisting of cermet of nickel and fluorite oxides, perovskite oxides, fluorite oxides, metal-added perovskite oxides, metal-added fluorite oxides, and the combinations thereof.

17. The electrochemical-catalytic converter according to claim 2, wherein the cathode layer (131) is made of a material selected from a group consisting of perovskite oxides, fluorite oxides, metal-added perovskite oxides, metal-added fluorite oxides, and the combinations thereof.

18. An electrochemical-catalytic converter, which is used to control exhaust emission and generate electric power, comprising:
at least one cell module (10) further comprising a cathode compartment (11), an anode compartment (12) and a membrane-electrode assembly (13), the membrane-electrode assembly (13) being interposed between the cathode compartment (11) and the anode compartment (12); the membrane-electrode assembly (13) includes an electrolyte layer (133), a cathode layer (131) and an anode layer (132), the electrolyte layer (133) being interposed between the cathode layer (131) and the anode layer (132) which are respectively coupled to the cathode compartment (11) and the anode compartment (12);
a heating unit (20) embedded in the cell module (10);
a fuel input unit (50) and a fuel output unit (60) respectively coupled to two sides of the anode compartment (12) to function as a fuel input terminal and a fuel output terminal of the cell module (10) for operating ; and
an exhaust gas input unit (30) and an exhaust gas output unit (40) respectively coupled to two sides of the cathode compartment (11) to function as an exhaust gas input terminal and an exhaust gas output terminal of the cell module (10) for treating exhaust gas;
wherein the heating unit (20) heats the membrane-electrode assembly (13) to a working temperature to perform an electrochemical reaction of fuel in the anode layer (132) and generate electric power, and
wherein nitrogen oxides in the exhaust gas electrochemically react to form nitrogen in the cathode layer (131), and
wherein carbon monoxide, hydrocarbons and particulate matter in the exhaust gas are oxidized in the cathode layer (131) to form carbon dioxide and water,
whereby the exhaust gas is decontaminated.

19. The electrochemical-catalytic converter according to claim 19, wherein the cathode layer (131) includes an oxidation catalyst and wherein preferably the oxidation catalyst covers the cathode layer (131) in form of microparticles.
